# EUROPEAN PATENT APPLICATION

(11) **EP 4 487 739 A1**
(43) Date of publication of application: **08.01.2025**
(21) Application number: 22939417.6
(22) Date of filing: 29.04.2022
(51) Int. Cl.: A47J 37/06

(54) **COOKING APPLIANCE**

(30) Priority: 24.04.2022 CN 202220956699 U
(71) Applicant: Guangdong Midea Consumer Electric Manufacturing Co., Ltd., Foshan, Guangdong 528311 (CN)
(72) Inventor: YAO, Liang, Foshan, Guangdong 528311 (CN); XU, Zhibo, Foshan, Guangdong 528311 (CN); DU, Zujing, Foshan, Guangdong 528311 (CN); WANG, Tuan, Foshan, Guangdong 528311 (CN); ZHANG, Mamei, Foshan, Guangdong 528311 (CN); HUANG, Guojing, Foshan, Guangdong 528311 (CN); ZHANG, Jienan, Foshan, Guangdong 528311 (CN); PEI, Shengzhao, Foshan, Guangdong 528311 (CN)
(74) Representative: RGTH
(86) International application number: PCT/CN2022/090787
(87) International publication number: WO 2023/206573

(57) **Abstract**

A cooking appliance belongs to the field of household appliance technologies, to solve a current technical problem of a difficulty in controlling an internal space of an air fryer. The cooking appliance includes a housing (100), a first enclosing plate (700), a second enclosing plate (800), a partition plate (200), and a heat generation assembly. The first enclosing plate (700) and the second enclosing plate (800) are both disposed in the housing (100). The first enclosing plate (700) has a first inner cavity (110). The first enclosing plate (700) and the second enclosing plate (800) are connected to two opposite sides of the partition plate (200) respectively. The partition plate (200) is configured to separate the first inner cavity (110) in the first enclosing plate (700) from the second inner cavity (120) in the second enclosing plate (800). The heat generation assembly is disposed in the housing (100). The heat generation assembly is configured to heat the first inner cavity (110) and/or the second inner cavity (120).

## Description

### CROSS-REFERENCE TO RELATED APPLICATION

The present application claims priority to Chinese Patent Application No. 202220956699.9, titled "COOKING APPLIANCE", and filed on April 24, 2022, the entire disclosure of which is incorporated herein by reference.

### FIELD

The present disclosure belongs to the field of kitchen heating device technologies, and more particularly, to a cooking appliance.

### BACKGROUND

An air fryer is a machine that can "fry" with air. It primarily uses the air instead of traditional hot oil in a frying pan to cook food; and meanwhile, the hot air also blows away moisture on a surface of the food, to allow for an effect similar to frying on a food material.

In the related art, a plurality of types of ingredients may be cooked simultaneously when the air fryer has a plurality of cavities. For internal components of the air fryer, dimensions of the plurality of cavities inside the air fryer need to be suitable for mounting of the internal components of the air fryer in some cases. Therefore, dimension structures of the plurality of cavities are different from each other, which leads to a complicated preparation process of the internal structure of the air fryer.

### SUMMARY

The present disclosure aims to at solve a current technical problem of a difficulty in controlling an internal space of an air fryer at least to some extent. To this end, the present disclosure provides a cooking appliance. A cooking appliance according to an embodiment of the present disclosure comprises a housing, a first enclosing plate, a second enclosing plate, a partition plate, and a heating assembly. The first enclosing plate is disposed in the housing. The first enclosing plate has a first inner cavity. The second enclosing plate is disposed in the housing. The second enclosing plate has a second inner cavity. The partition plate is disposed in the housing. The first enclosing plate and the second enclosing plate are respectively connected to two opposite sides of the partition plate. The partition plate separates the first inner cavity from the second inner cavity. The heating assembly is disposed in the housing. The heating assembly heats the first inner cavity and/or the second inner cavity.

In the cooking appliance according to an embodiment of the present disclosure, the first enclosing plate and the second enclosing plate are disposed in the housing; the partition plate is also disposed in the housing and separating the first inner cavity of the first enclosing plate from the second inner cavity of the second enclosing plate; and a food material may be placed in the first inner cavity and/or the second inner cavity, and the heating assembly heats the first inner cavity and/or the second inner cavity to achieve a purpose of cooking the food material. Heat generated by the heating assembly can be respectively concentrated in the first enclosing plate and the second enclosing plate by providing the first enclosing plate and the second enclosing plate, to enable higher efficiency of cooking the food material. Meanwhile, the first enclosing plate and the second enclosing plate can also prevent heat in the first inner cavity and heat in the second inner cavity from being directly transferred to the housing, to prevent an excessively high surface temperature of the housing and scalding a user. When there is a need for a difference between volumes of the first inner cavity and the second inner cavity of the cooking appliance, the volumes of the first inner cavity and the second inner cavity may be set as desired by setting different dimensions of the first enclosing plate and the second enclosing plate. Such a preparation process is less complicated compared with a one piece enclosing plate.

In some implementations, a projection of the first enclosing plate on the partition plate and a projection of the second enclosing plate on the partition plate are both located within the partition plate.

In some implementations, an area of the projection of the first enclosing plate on the partition plate is smaller than an area of the projection of the second enclosing plate on the partition plate.

In some implementations, the first enclosing plate comprises a first plate body, a second plate body, and a third plate body. The second plate body and the third plate body are respectively connected to two sides of the first plate body, and the second plate body and the third plate body are bent towards the first plate body. The first plate body, the second plate body, and the third plate body are formed as one piece.

In some implementations, the second enclosing plate comprises a fourth plate body, a fifth plate body, and a sixth plate body. The fifth plate body and the sixth plate body are respectively connected to two sides of the fourth plate body, and the fifth plate body and the sixth plate body are bent towards the fourth plate body. The fourth plate body, the fifth plate body, and the sixth plate body are formed as one piece.

In some implementations, the first plate body, the second plate body, the third plate body, the fourth plate body, the fifth plate body, and the sixth plate body each are sealingly connected to the partition plate.

In some implementations, the cooking appliance further comprises two door posts; the second plate body and the fifth plate body are arranged on one side; the third plate body and the sixth plate body are arranged on one side; one of the two door posts is connected to a side of the partition plate facing away from the first plate body and connected to the second plate body and the fifth plate body; and the other one of the two door posts is connected to the side of the partition plate facing away from the first plate body and connected to the third plate body and the sixth plate body.

In some implementations, the first inner cavity is stacked on a top side of the second inner cavity.

In some implementations, the cooking appliance further comprises a bottom plate and a top plate. The bottom plate is connected to a side of the second enclosing plate facing away from the partition plate. The top plate is connected to a side of the first enclosing plate facing away from the partition plate.

In some implementations, the first enclosing plate, the second enclosing plate, the top plate, and the bottom plate each have a gap with an inner wall of the housing.

In some implementations, the cooking appliance further comprises a heat insulation portion; and the partition plate has a heat insulation cavity. The heat insulation portion is disposed in the heat insulation cavity.

In some implementations, the heating assembly comprises a first heating portion and a second heating portion. The first heating portion heats the first inner cavity. The second heating portion heats the second inner cavity.

In some implementations, the first heating portion comprises a first fan and a first heat generation member. The first heat generation member is disposed at a top of the first inner cavity. The first fan blows hot gas generated by the first heat generation member towards a food material in the first inner cavity.

In some implementations, the second heating portion comprises a second heat generation member and a third heat generation member. The second heat generation member and the third heat generation member are respectively disposed at a top and a bottom of the second inner cavity.

In some implementations, the second heating portion further comprises a second fan. The second fan is disposed at a side part of the second inner cavity.

### BRIEF DESCRIPTION OF THE DRAWINGS

In order to clearly explain technical solutions of embodiments of the present disclosure, drawings used in the embodiments are briefly described below. The drawings as described below merely illustrate some embodiments of the present disclosure. Based on these drawings, other drawings may be obtained by those skilled in the art without creative effort.
FIG. 1 shows a schematic structural view of a cooking appliance disclosed in an embodiment of the present disclosure.
FIG. 2 shows a schematic structural view of the first enclosing plate and the second enclosing plate in FIG. 1.
FIG. 3 shows a schematic exploded view of the first enclosing plate, the second enclosing plate, and the partition plate in FIG. 1.
FIG. 4 shows a schematic side view of the liner and the cover of the cooking appliance in FIG. 1 being opened.
FIG. 5 shows a schematic view of an overall structure of the liner and the cover of the cooking appliance in FIG. 1 being opened.
FIG. 6 shows a schematic view of an overall structure of the cooking appliance in FIG. 1.
FIG. 7 shows an internally schematic structural view of the partition plate in FIG. 1.

### Reference numerals:

100-housing, 110-first inner cavity, 120-second inner cavity, 121-tray,
200-partition plate, 210- heat insulation portion,
300-first heating portion, 310-first fan, 320-heat generation member,
400-second heating portion, 410-second fan, 420-second heat generation member, 430-third heat generation member,
500-liner, 510-door plate, 520-handle,
600-cover,
700-first enclosing plate, 710-first plate body, 720-second plate body, 730-third plate body, 740-top plate,
800-second enclosing plate, 810-fourth plate body, 820-fifth plate body, 830-sixth plate body, 840-bottom plate, and
900-door post.

### DETAILED DESCRIPTION OF THE EMBODIMENTS

Technical solutions according to embodiments of the present disclosure will be described clearly and completely below with reference to the accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

It should be noted that all directional indications in the embodiments of the present disclosure are only used to explain a relative positional relationship, movement, etc., between components in a specific posture, and the directional indication will also change correspondingly if the specific posture changes.

In the description of the embodiments of the present disclosure, unless specified or limited otherwise, the technical terms "connected", "fixed", etc., are understood broadly, such as a fixed connection or a detachable connection or connection as one piece; mechanical connection or electrical connection; direct connection or indirect connection through an intermediate; internal communication of two components or interaction relations between two components. For those skilled in the art, the specific meaning of the above-mentioned terms in the embodiments of the present disclosure can be understood according to specific circumstances.

In addition, terms such as "first", "second", etc., are used herein for purposes of description and are not intended to indicate or imply relative importance or significance. Furthermore, the feature defined with "first" and "second" may comprise one or more this feature distinctly or implicitly. In addition, the technical solutions in each embodiment may be combined with each other, but the combinations must be feasible to those of ordinary skill in the art. When the combination of technical solutions leads to inconsistencies or becomes unfeasible, such combination shall be deemed nonexistent and, therefore, not within the protection scope claimed in the present disclosure.

The present disclosure is described below in conjunction with the drawings and with reference to specific embodiments.

### Embodiment 1

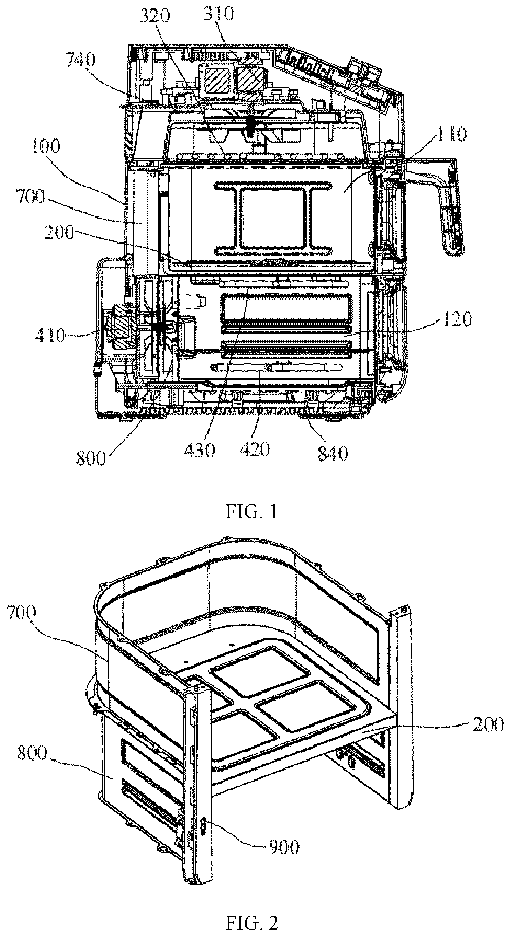

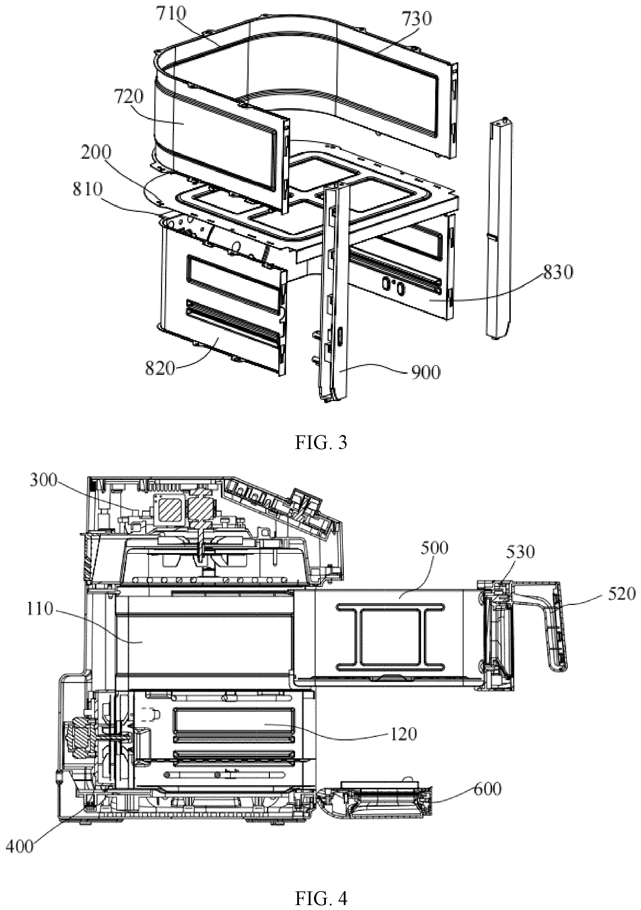

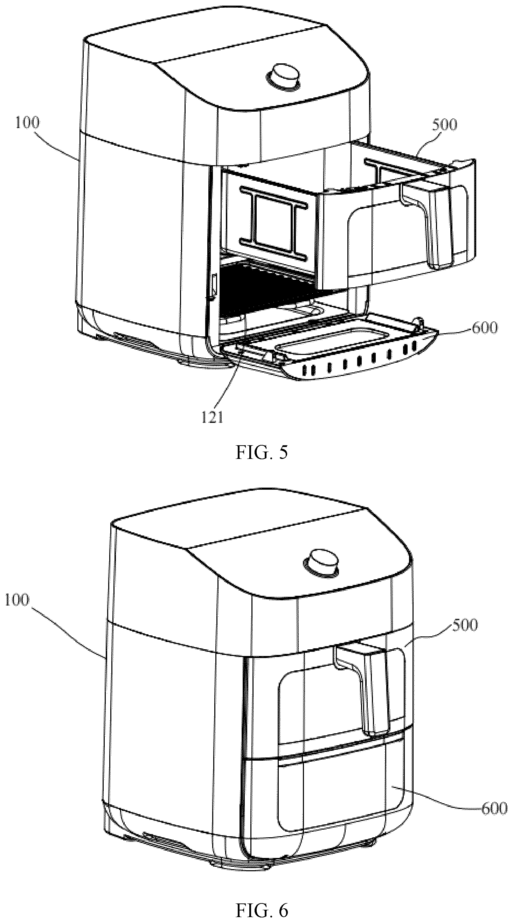

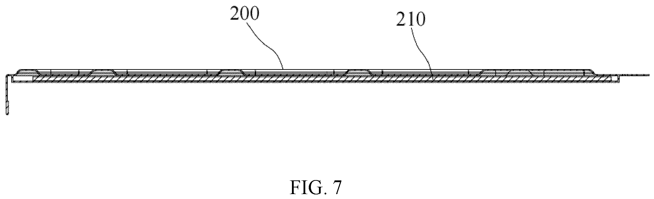

Referring to FIGS. 1 to 7, an embodiment of the present disclosure discloses a cooking appliance. The cooking appliance includes a housing 100, a first enclosing plate 700, a second enclosing plate 800, a partition plate 200, and a heating assembly. This cooking appliance may be a cooking appliance such as an air fryer, an oven, or a microwave oven.

The housing 100 is a basic member of the cooking appliance of the present disclosure. The housing 100 may be configured to provide a mounting base for at least some of other components of the cooking appliance, and serves to protect at least some of the other components of the cooking appliance. The housing 100 may be made of a metallic material with satisfactory strength, and the housing 100 of the cooking appliance thus has good durability.

The housing 100 has a cavity. The first enclosing plate 700 may be disposed in the housing 100. The first enclosing plate 700 has a first inner cavity 110. The first inner cavity 110 of the first enclosing plate 700 may serve as a cooking cavity of the cooking appliance. The first inner cavity 110 of the first enclosing plate 700 may be configured to place a to-be-cooked food material. Therefore, the first enclosing plate 700 may be constructed as at least part of an inner wall of the cooking cavity of the cooking appliance of the present disclosure. By disposing the first enclosing plate 700 in the housing 100, the to-be-cooked food material may be placed in the first inner cavity 110 of the first enclosing plate 700 for cooking. The to-be-cooked food material needs to be heated during a cooking process, and in this way, the first enclosing plate 700 can isolate at least part of the heat generated during the cooking process in the first enclosing plate 700, serving to reduce a temperature of the housing 100 and prevent the housing 100 from scalding a user.

The first enclosing plate 700 may be formed as one piece. In an exemplary embodiment of the present disclosure, the first enclosing plate 700 may be directly processed and formed by a piece of plate material. No connection structure is provided inside the first enclosing plate 700 to relatively lower a difficulty in processing the first enclosing plate 700. Meanwhile, providing no connection structure inside the first enclosing plate 700 of the integrated structure can also enable structural strength of the first enclosing plate 700 to be more satisfactory and the first enclosing plate 700 to be more stable and reliable during use.

The second enclosing plate 800 may also be disposed in the housing 100. The second enclosing plate 800 has a second inner cavity 120. The second inner cavity 120 of the second enclosing plate 800 may serve as a cooking cavity of the cooking appliance. The second inner cavity 120 of the second enclosing plate 800 may be configured to place a to-be-cooked food material. Therefore, the second enclosing plate 800 may be constructed as at least part of the inner wall of the cooking cavity of the cooking appliance of the present disclosure. The to-be-cooked food material can be placed in the second inner cavity 120 of the second enclosing plate 800 for cooking by disposing the second enclosing plate 800 in the housing 100. The to-be-cooked food material needs to be heated during the cooking process. In this case, the second enclosing plate 800 can isolate at least part of the heat generated during the cooking process in the second enclosing plate 800, to reduce the temperature of the housing 100 and prevent the housing 100 from scalding the user.

The second enclosing plate 800 may be formed as one piece. In an exemplary embodiment of the present disclosure, the second enclosing plate 800 may be directly processed and formed by a piece of plate material. No connection structure is provided inside the second enclosing plate 800 to relatively lower a difficulty in processing the second enclosing plate 800. Meanwhile, providing no connection structure inside the second enclosing plate 800 of the integrated structure can also enable structural strength of the second enclosing plate 800 to be more satisfactory and the second enclosing plate 800 to be more stable and reliable during use.

The partition plate 200 is disposed between the first enclosing plate 700 and the second enclosing plate 800. The partition plate 200 is configured to separate the first inner cavity 110 in the first enclosing plate 700 from the second inner cavity 120 in the second enclosing plate 800. Each of the first inner cavity 110 and the second inner cavity 120 is configured to place the to-be-cooked food material. Different types of food materials may be placed in the first inner cavity 110 and the second inner cavity 120, and therefore the different types of food materials may be cooked in each of the first inner cavity 110 and the second inner cavity 120. The partition plate 200 can prevent the different types of food materials from affecting each other during the cooking process. In addition, it should be understood that a same type of food materials may also be placed in each of the first inner cavity 110 and the second inner cavity 120, to prevent the food materials from being stacked in one inner cavity simultaneously. In this way, the food materials dispersed in each of the first inner cavity 110 and the second inner cavity 120 can be heated more fully, to improve cooking efficiency of the cooking appliance of the present disclosure.

In an exemplary embodiment of the present disclosure, the partition plate 200 may be configured to provide a mounting base for the first enclosing plate 700 and the second enclosing plate 800. The first enclosing plate 700 and the second enclosing plate 800 may be connected to two opposite sides of the partition plate 200 respectively, to enable the first enclosing plate 700 and the second enclosing plate 800 to be fixed at the partition plate 200. The partition plate 200 may be connected to an inner wall of the housing 100, and the first enclosing plate 700 and the second enclosing plate 800 may thus be arranged in the housing 100. The first enclosing plate 700 and the second enclosing plate 800 may be processed separately. Therefore, a size of the first enclosing plate 700 and a size of the second enclosing plate 800 may be set as desired. As such, a volume of the first inner cavity 110 in the first enclosing plate 700 and a volume of the second inner cavity 120 in the second enclosing plate 800 may be set as desired. As a result, the structural arrangement of the cooking appliance of the present disclosure is more flexible.

The heating assembly may be disposed in the housing 100. The housing 100 is configured to provide a mounting base for the heating assembly. The heating assembly may be configured to heat the first inner cavity 110 and the second inner cavity 120, and the food materials placed in the first inner cavity 110 and the second inner cavity 120 thus can be heated. In this way, the purpose of cooking the food materials is achieved. In other embodiments of the present disclosure, the heating assembly may also be configured to heat the first inner cavity 110 or the second inner cavity 120 separately. When the to-be-cooked food material is placed in the first inner cavity 110 or the second inner cavity 120, the heating assembly may be configured to heat the food material in the first inner cavity 110 or the food material in the second inner cavity 120 separately, to achieve the purpose of reducing energy consumption of the cooking appliance of the present disclosure.

In the cooking appliance according to the embodiment of the present disclosure, the first enclosing plate 700 and the second enclosing plate 800 are disposed in the housing 100; the partition plate 200 is also disposed in the housing 100 and configured to separate the first inner cavity 110 of the first enclosing plate 700 from the second inner cavity 120 of the second enclosing plate 800; and the food material may be placed in the first inner cavity 110 and/or the second inner cavity 120, and the heating assembly may be configured to heat the first inner cavity 110 and/or the second inner cavity 120 for the object of cooking the food material. The heat generated by the heating assembly can be concentrated in the first enclosing plate 700 and the second enclosing plate 800 by providing the first enclosing plate 700 and the second enclosing plate 800, to allow for the higher efficiency of cooking the food material. Meanwhile, the first enclosing plate 700 and the second enclosing plate 800 can also prevent the heat in the first inner cavity 110 and the heat in the second inner cavity 120 from being directly transferred to the housing 100, to prevent the excessively high surface temperature of the housing 100 and scalding the user. When there is a need for a difference between the volumes of the first inner cavity 110 and the second inner cavity 120 of the cooking appliance, the volumes of the first inner cavity 110 and the second inner cavity 120 may be set as desired by setting different dimensions of the first enclosing plate 700 and the second enclosing plate 800. Such a preparation process is less complicated compared with the integrated enclosing plate.

In some embodiments, the partition plate 200 may also be formed as a heat insulation member, and a heat insulation cavity may be disposed inside the partition plate 200. The heat insulation cavity may be filled with a heat insulation portion 210. The heat insulation portion 210 may be specifically made of a mica sheet, and therefore the partition plate 200 has good heat insulation performance. As a result, the first inner cavity 110 and the second inner cavity 120 may be separated independently, to avoid an interaction between the heat in the first inner cavity 110 and the heat in the second inner cavity 120.

In some implementations, in order to allow the to-be-cooked food material to be taken in and out of the housing 100, the housing 100 of the present disclosure may have a first opening and a second opening. The first opening corresponds to the first inner cavity 110 of the first enclosing plate 700. The to-be-cooked food material may be placed in the first inner cavity 110 of the first enclosing plate 700 through the first opening or may be taken out of the first inner cavity 110 of the first enclosing plate 700 through the first opening. The first opening may be opened and closed. Therefore, when the to-be-cooked food material is cooked in the first inner cavity 110 of the first enclosing plate 700, the first opening may be closed to close the first inner cavity 110 of the first enclosing plate 700 to cook the food material.

The second opening corresponds to the second inner cavity 120 of the second enclosing plate 800. The to-be-cooked food material may be placed in the second inner cavity 120 of the second enclosing plate 800 through the second opening or may be taken out from the second inner cavity 120 of the second enclosing plate 800 through the second opening. The second opening may be opened and closed. Therefore, when the to-be-cooked food material is cooked in the second inner cavity 120 of the second enclosing plate 800, the second opening may be closed to close the second inner cavity 120 of the second enclosing plate 800 to cook the food material.

When the first opening and the second opening are defined at the housing 100, the first enclosing plate 700 and the second enclosing plate 800 need to have openings corresponding to the first opening and the second opening respectively. As a result, the food material may be taken in and out of the first inner cavity 110 of the first enclosing plate 700 and the second inner cavity 120 of the second enclosing plate 800. Therefore, the first enclosing plate 700 may include a first plate body 710, a second plate body 720, and a third plate body 730. The second plate body 720 and the third plate body 730 may be connected to two sides of the first plate body 710 respectively, and bent towards the first plate body 710. As such, the first enclosing plate 700 has a three-sided structure. The first enclosing plate 700 has an opening at a side of the first enclosing plate 700 opposite to the first plate body 710. The opening may correspond to the first opening of the housing 100, to allow the food material in the first inner cavity 110 of the first enclosing plate 700 to be taken in and out.

The first plate body 710, the second plate body 720, and the third plate body 730 may be formed as one piece, and therefore the first enclosing plate 700 is formed as one piece as a whole. In an exemplary embodiment of the present disclosure, a plate member may be bent at two sides through a sheet metal process. The bent parts at the two sides of the plate member are the second plate body 720 and the third plate body 730 respectively, and a middle part of the plate member is the first plate body 710. Therefore, the first enclosing plate 700 may be made of a metal material, and specifically, an aluminum-plated cold-rolled steel plate may be used and thus can be easily bent to form the three-sided structure of the first enclosing plate 700. In addition, using the aluminum-plated cold-rolled steel plate may also enable an inner wall of the first enclosing plate 700 to function by reflecting heat radiation. During the cooking process of the food material in the first inner cavity 110 of the first enclosing plate 700, the inner wall of the first enclosing plate 700 is configured to concentrate the heat in the first inner cavity 110.

In some implementations, in order to enable more stable and reliable connection between the partition plate 200 and the first enclosing plate 700, the partition plate 200 may be configured to be connected to the first plate body 710, the second plate body 720, and the third plate body 730 of the first enclosing plate 700. As such, the partition plate 200 is connected to the plurality of parts of the first enclosing plate 700. As a result, the partition plate 200 is stable and reliable.

In an exemplary embodiment of the present disclosure, the partition plate 200 may have end surfaces connected to the first plate body 710, the second plate body 720, and the third plate body 730, at edges of the partition plate 200. As such, the three sides of the partition plate 200 are connected to the first plate body 710, the second plate body 720, and the third plate body 730 respectively, to enable the plurality of connections between the partition plate 200 and the first enclosing plate 700. In this way, the partition plate 200 can remain stable.

The second enclosing plate 800 may include a fourth plate body 810, a fifth plate body 820, and a sixth plate body 830. The fifth plate body 820 and the sixth plate body 830 may be connected to two sides of the fourth plate body 810 respectively, and bent towards the fourth plate body 810. As such, the second enclosing plate 800 is a three-sided structure. The second enclosing plate 800 has an opening at a side of the second enclosing plate 800 opposite to the fourth plate body 810. The opening may correspond to the first opening of the housing 100, to allow the food material in the second inner cavity 120 of the second enclosing plate 800 to be taken in and out.

The fourth plate body 810, the fifth plate body 820, and the sixth plate body 830 may be formed as one piece, and therefore the second enclosing plate 800 is formed as one piece as a whole. In an exemplary embodiment of the present disclosure, a plate member may be bent on two sides through a sheet metal process. The bent parts at the two sides of the plate member are the fifth plate body 820 and the sixth plate body 830 respectively, and a middle part of the plate member is the fourth plate body 810. Therefore, the second enclosing plate 800 may be made of a metal material, and specifically, an aluminum-plated cold-rolled steel plate may be used and thus can be easily bent to form the three-sided structure of the second enclosing plate 800. In addition, using the aluminum-plated cold-rolled steel plate may also enable an inner wall of the second enclosing plate 800 to function by reflecting heat radiation. During the cooking process of the food material in the second inner cavity 120 of the second enclosing plate 800, the inner wall of the second enclosing plate 800 is configured to concentrate the heat in the second inner cavity 120.

In some implementations, in order to enable more stable and reliable connection between the partition plate 200 and the second enclosing plate 800, the partition plate 200 may be configured to be connected to the fourth plate body 810, the fifth plate body 820, and the sixth plate body 830 of the second enclosing plate 800. As such, the partition plate 200 is connected to the plurality of parts of the second enclosing plate 800. As a result, the partition plate 200 is stable and reliable.

In an exemplary embodiment of the present disclosure, the partition plate 200 may have end surfaces connected to the fourth plate body 810, the fifth plate body 820, and the sixth plate body 830, at edges of the partition plate 200. As such, the three sides of the partition plate 200 are connected to the fourth plate body 810, the fifth plate body 820, and the sixth plate body 830 respectively, to enable the plurality of connections between the partition plate 200 and the second enclosing plate 800. In this way, the partition plate 200 can remain stable.

It should be noted that in some implementations, the first inner cavity 110 of the first enclosing plate 700 may be stacked to the second inner cavity 120 of the second enclosing plate 800. The first inner cavity 110 of the first enclosing plate 700 and the second inner cavity 120 of the second enclosing plate 800 are arranged up and down. The to-be-cooked food material in the first inner cavity 110 may be placed on the partition plate 200. As such, the partition plate 200 also serves a purpose of carrying the to-be-cooked food material. Therefore, when the partition plate 200 is connected to the first plate body 710, the second plate body 720, and the third plate body 730 simultaneously, the plurality of edge parts of the partition plate 200 can be supported. As a result, the partition plate 200 can remain stable while the food material is placed on the partition plate 200. In addition, the partition plate 200 can also be balanced to prevent the food material placed on the partition plate 200 from tipping over.

In an exemplary embodiment of the present disclosure, in order to connect the partition plate 200 to the first plate body 710, the second plate body 720, the third plate body 730, the fourth plate body 810, the fifth plate body 820, and the sixth plate body 830, the partition plate 200 and the plurality of plate bodies described above may be fixed through welding or riveting.

In some implementations, in order to prevent the interaction between the to-be-cooked food material in the first inner cavity 110 of the first enclosing plate 700 and the to-be-cooked food material in the second inner cavity 120 of the second enclosing plate 800, the partition plate 200 may be configured to be sealingly connected to the first plate body 710, the second plate body 720, the third plate body 730, the fourth plate body 810, the fifth plate body 820, and the sixth plate body 830, to enable the first inner cavity 110 of the first enclosing plate 700 and the second inner cavity 120 of the second enclosing plate 800 to be completely separated from each other. As such, a smell and grease that are generated by the food material cooked in the first inner cavity 110 do not escape into the second inner cavity 120, and a smell and grease that are generated by the food material cooked in the second inner cavity 120 do not escape into the first inner cavity 110.

In some implementations, in order that the heat in the first enclosing plate 700 can be further concentrated in the first enclosing plate 700 and the heat in the second enclosing plate 800 can be further concentrated in the second enclosing plate 800, during the cooking process of the food material placed in the first inner cavity 110 of the first enclosing plate 700 and the food material placed in the second inner cavity 120 of the second enclosing plate 800, the cooking appliance of the present disclosure may be further provided with a top plate 740 and a bottom plate 840. The top plate 740 and the bottom plate 840 may be disposed at the first enclosing plate 700 and the second enclosing plate 800 respectively. The top plate 740 and the bottom plate 840 may be configured to block a top side of the first enclosing plate 700 and a bottom side of the second enclosing plate 800 respectively, to enable the heat in the first enclosing plate 700 and the heat in the second enclosing plate 800 to be at least partially isolated in the first enclosing plate 700 and the second enclosing plate 800 respectively. Thus, the heat in the first enclosing plate 700 and the heat in the second enclosing plate 800 can be prevented from being directly transferred to the housing 100 during the cooking process. In this way, the housing 100 can maintain a relatively low temperature to avoid the high temperature of the housing 100 and scalding the user.

The top plate 740 and the bottom plate 840 may be fixed to the first enclosing plate 700 and the second enclosing plate 800 through welding or riveting respectively. In an exemplary embodiment of the present disclosure, the top plate 740 is connected to an end surface of the top side of each of the first plate body 710, the second plate body 720, and the third plate body 730 of the first enclosing plate 700. A connection effect between the top plate 740 and the first enclosing plate 700 is stable and reliable with the top plate 740 connected to the first plate body 710, the second plate body 720, and the third plate body 730 simultaneously. In addition, structural stability of the first plate body 710, the second plate body 720 and the third plate body 730 can also be enhanced with the top plate 740 connected to the first plate body 710, the second plate body 720, and the third plate body 730 simultaneously.

The bottom plate 840 may be connected to an end surface of the bottom side of each of the fourth plate body 810, the fifth plate body 820, and the sixth plate body 830 of the second enclosing plate 800. a connection effect between the bottom plate 840 and the second enclosing plate 800 is stable and reliable with the bottom plate 840 connected to the fourth plate body 810 the fifth plate body 820, and the sixth plate body 830 simultaneously. In addition, structural stability of the fourth plate body 810, the fifth plate body 820, and the sixth plate body 830 can also be enhanced with the bottom plate 840 connected to the fourth plate body 810 the fifth plate body 820, and the sixth plate body 830 simultaneously.

The top plate 740 and the bottom plate 840 may also be made of a metal plate, and specifically an aluminum-plated cold-rolled steel plate may be used. As such, the top plate 740 and the bottom plate 840 have a predetermined structural strength while reflecting the heat radiation in the first enclosing plate 700 and the heat radiation in the second enclosing plate 800 respectively. As a result, the heat in the first enclosing plate 700 and the heat in the second enclosing plate 800 can be further concentrated in the enclosing plate 700 and the second enclosing plate 800 respectively.

In addition, it should be noted that when the bottom plate 840 is disposed in the housing 100, the bottom plate 840 may serve as a bottom wall of the second inner cavity 120 of the second enclosing plate 800, and the bottom plate 840 may also serve to carry the to-be-cooked food material placed in the second inner cavity 120.

In some implementations, in order to allow at least some other components of the cooking appliance of the present disclosure to be mounted in the housing 100, a predetermined gap may be defined between the first enclosing plate 700 and the second enclosing plate 800 and the housing 100. In an exemplary embodiment of the present disclosure, a gap between an outer plate surface of the first enclosing plate 700 and the housing 100 and a gap between an outer plate surface of the second enclosing plate 800 and the housing 100 can serve for a mounting of the at least some other components of the cooking appliance. In this way, the components of the cooking appliance may be provided in the housing 100 to protect the components of the cooking appliance.

It should be understood that the gap between the first enclosing plate 700 and the housing 100 and the gap between the second enclosing plate 800 and the housing 100 can also allow the first enclosing plate 700 and the second enclosing plate 800 not to be in direct contact with the inner wall of the housing 100. The gap between the first enclosing plate 700 and the housing 100 and the gap between the second enclosing plate 800 and the housing 100 can achieve the purpose of at least partially blocking the heat in the first enclosing plate 700 and the heat in the second enclosing plate 800, preventing the heat in the first enclosing plate 700 and the heat in the second enclosing plate 800 from being directly transferred to the housing 100 through the first enclosing plate 700 and the second enclosing plate 800. In this way, the surface of the housing 100 can maintain a relatively low temperature. In other embodiments of the present disclosure, in order to further prevent the heat in the first enclosing plate 700 and the heat in the second enclosing plate 800 from being transferred to the housing 100, a heat insulation layer may be provided on each of the outer plate surface of the first enclosing plate 700 and the outer plate surface of the second enclosing plate 800 and the inner wall of the housing 100. In an exemplary embodiment of the present disclosure, the heat insulation layer may be made of a material with weak thermal conductivity. As such, the heat can be further concentrated in the first enclosing plate 700 and the second enclosing plate 800.

In addition, the top plate 740 and the bottom plate 840 of the present disclosure each may also have a predetermined gap with an inner wall of the housing 100. The gap between the top plate 740 and the housing 100 and the gap between the bottom plate 840 and the housing 100 may also serve for a mounting of at least some of the components of the cooking appliance, to have a larger space in the housing 100 for the mounting of the components. Accordingly, in the cooking appliance, a heating assembly with stronger performance may be used and more components may be mounted. In this way, the cooking appliance can have stronger heating performance and can achieve more functions to improve user experience.

In some implementations, in order to enable better structural strength of the first enclosing plate 700 and better structural strength of the second enclosing plate 800 of the present disclosure, the cooking appliance of the present disclosure may also be provided with a door post 900. When the first enclosing plate 700 and the second enclosing plate 800 each has three-panel structures, the door post 900 may be connected to the second plate body 720 and the third plate body 730 of the first enclosing plate 700, and is located at a side of the second plate body 720 facing away from the first plate body 710 and a side of the third plate body 730 facing away from the first plate body 710. The door post 900 may also be connected to the fifth plate body 820 and the sixth plate body 830 of the second enclosing plate 800, and is located at a side of the fifth plate body 820 facing away from the fourth plate body 810 and a side of the sixth plate body 830 facing away from the fourth plate body 810. After the door post 900 is connected to the second plate body 720 and the third plate body 730 of the first enclosing plate 700, and the fifth plate body 820 and the sixth plate body 830 of the second enclosing plate 800, the door post 900 can enhance the structural strength of the first enclosing plate 700 and structural strength of the second enclosing plate 800. In addition, a side edge of the partition plate 200 facing away from the first plate body 710 of the first enclosing plate 700 and the fourth plate body 810 of the second enclosing plate 800 may also be connected to the door post 900. Therefore, the door post 900 can serve to fix the partition plate 200. Thus, a connection effect between the partition plate 200 and the first enclosing plate 700 and a connection effect between the partition plate 200 and the second enclosing plate 800 is more reliable.

The bottom plate 840 and the top plate 740 may also be arranged to be connected to the door post 900. In an exemplary embodiment of the present disclosure, the bottom plate 840 and the top plate 740 may be connected to two ends of the door post 900 respectively. Thus, the bottom plate 840 and the top plate 740 each are fixed. In practice, during assembling of the first enclosing plate 700 and the second enclosing plate 800, the bottom plate 840 and the top plate 740 may be fixed to the door post 900 to achieve a positioning of the bottom plate 840 and a positioning of the top plate 740, and subsequently the bottom plate 840 and the top plate 740, through welding or riveting, are connected to the second enclosing plate 800 and the first enclosing plate 700 respectively.

In addition, it should be noted that when the first enclosing plate 700 and the second enclosing plate 800 each has the three-panel structures to form the openings, the first opening and the second opening of the housing 100 correspond to the opening of the first enclosing plate 700 and the opening of the second enclosing plate 800. Therefore, the door post 900 is also located at the first opening and the second opening of the housing 100, and a part of the housing 100 located at the first opening and a part of the housing 100 located at the second opening may also be connected to the door post 900. As such, the door post 900 can serve to fix the first enclosing plate 700 and the second enclosing plate 800 to the housing 100. As a result, structural stability among the first enclosing plate 700, the second enclosing plate 800, and the housing 100 is more satisfactory.

In some implementations, in order to enable the heating assembly to heat the first inner cavity 110 of the first enclosing plate 700 and the second inner cavity 120 of the second enclosing plate 800 simultaneously, or to heat the first inner cavity 110 of the first enclosing plate 700 and the second inner cavity 120 of the second enclosing plate 800 separately, the heating assembly of the present disclosure may include a first heating portion 300 and a second heating portion 400.

The housing 100 is configured to provide a mounting base for the first heating portion 300 and the second heating portion 400, to allow each of the first heating portion 300 and the second heating portion 400 to be disposed at on the housing 100. The first heating portion 300 may be configured to heat the first inner cavity 110. Thus, the food material placed in the first inner cavity 110 can be heated to achieve the purpose of cooking the food material placed in the first inner cavity 110. The second heating portion 400 may be configured to heat the second inner cavity 120. Thus, the food material placed in the second inner cavity 120 is heated to achieve the purpose of cooking the food material placed in the second inner cavity 120.

The first heating portion 300 may be configured to control a temperature in the first inner cavity 110 to enable the temperature in the first inner cavity 110 to be variable. Different types of food materials may have different cooking temperature requirements when placed in the first inner cavity 110. In this case, the first heating portion 300 can control the temperature in the first inner cavity 110 to reach a temperature that is most suitable for the cooking of the food material placed in the first inner cavity 110, to allow for better cooking effect of the food material. In addition, the second heating portion 400 may be configured to control a temperature in the second inner cavity 120 to enable the temperature in the second inner cavity 120 to be variable. Different types of food materials may have different cooking temperature requirements when placed in the second inner cavity 120. In this case, The second heating portion 400 can control the temperature in the second inner cavity 120 to reach a temperature that is most suitable for the cooking of the food material placed in the second inner cavity 120, so that the cooking effect of the food is better.

The first heating portion 300 and the second heating portion 400 are configured to control the temperature of the first inner cavity 110 and the temperature of the second inner cavity 120 respectively, and the first inner cavity 110 and the second inner cavity 120 are separated and independent from each other. As a result, the first heating portion 300 and the second heating portion 400 can heat the food material in the first inner cavity 110 and the food material in the second inner cavity 120 respectively, and the temperature of the first inner cavity 110 and the temperature of the second inner cavity 120 can be adjusted to a temperature suitable for cooking different food materials. In an exemplary embodiment of the present disclosure, food materials with different cooking requirements may be placed in the first inner cavity 110 and the second inner cavity 120 respectively and cooked simultaneously to improve the cooking efficiency of the cooking appliance of the present disclosure.

In some implementations, the first heating portion 300 of the present disclosure may include a first fan 310 and a heat generation member 320. The first heat generation member 320 may be disposed at a top of the first inner cavity 110. The first fan 310 may also be disposed at the top of the first inner cavity 110. The first heat generation member 320 may generate heat after being powered on to heat air in the first inner cavity 110. The first fan 310 has an air outflowing direction towards the first inner cavity 110. The first fan 310 may configured to blow the air heated by the first heat generation member 320 towards the food material in the first inner cavity 110 when the to-be-cooked food material is placed in the first inner cavity 110, to allow hot gas in the first inner cavity 110 to be in contact with the food material placed in the first inner cavity 110 continuously. The hot air can heat the food material, and therefore the moisture and the grease in the food material are precipitated. An air force generated by the first fan 310 may dry the moisture and the grease on a surface of the food material, to achieve the purpose of air frying the food material. When each of the first fan 310 and the first heat generation member 320 is disposed at the top of the first inner cavity 110 of the first enclosing plate 700, the first fan 310 and the first heat generation member 320 may be arranged relatively close to each other. In this case, the first fan 310 can quickly blow hot gas generated by the first heat generation member 320 to the to-be-cooked food material in the first inner cavity 110.

In an exemplary embodiment of the present disclosure, when the first fan 310 and the first heat generation member 320 are both disposed at the top of the first inner cavity 110, the first heat generation member 320 is disposed at an air outflowing side of the first fan 310, and the first inner cavity 110 has a first containing portion configured to place a food material. the first heat generation member 320 is opposite to the first containing portion in the first inner cavity 110, and the first fan 310 has an air outflowing direction towards the first heat generation member 320 and the first containing portion. As such, the first fan 310 can blow the hot air generated by the first heat generation member 320 to the first containing portion. Thus, the hot air is in contact with the food material placed on the first containing portion, to achieve the purpose of cooking the food material.

In some implementations, the second heating portion 400 of the present disclosure may include a second fan 410 and a second heat generation member 420. The second heat generation member 420 may be disposed at a bottom of the second inner cavity 120, and the second fan 410 may be disposed at a side portion of the second inner cavity 120. As such, the second fan 410 and the second heat generation member 420 may be arranged at different positions of the second inner cavity 120, preventing the second fan 410 and the second heat generation member 420 from being concentrated at one position in the second inner cavity 120. In this way, the mounting of the second fan 410 and the second heat generation member 420 is more reasonable and compact. Specifically, a space in a height direction of the housing 100 occupied by the second heat generation member 400 can be reduced, to enable a relatively lower height of the cooking appliance of the present disclosure.

The second heat generation member 420 may be configured to heat air in the second inner cavity 120, to increase a temperature in the second inner cavity 120, and thus to heat a food material placed in the second inner cavity 120. After the food material in the second inner cavity 120 is heated, the moisture and the grease inside the food material may be precipitated. The second fan 410 may have an air outflowing direction towards the food material placed in the second inner cavity 120. As such, an air force generated by the second fan 410 can blow off the grease and the moisture precipitated from the food material placed in the second inner cavity 120. In this way, the grease and the moisture precipitated from the food material are separated from the food material, to achieve the purpose of air frying the food material.

In an exemplary embodiment of the present disclosure, the second inner cavity 120 has a second containing portion configured to place a food material. After the food material is placed in the second containing portion, it may be stacked to a predetermined height. After the second fan 410 is disposed at the side portion of the second inner cavity 120, the air force generated by the second fan 410 may have a direction parallel to the bottom of the second inner cavity 120. As such, the second fan 410 can blow air to the side portion of the food material placed on the second containing portion. In this way, the purpose of separating the grease and the moisture precipitated from the surface of the food material from the food material can also be achieved. In other embodiments of the present disclosure, the second heat generation member 420 and the second fan 410 may also be arranged at the side portion of the second inner cavity 120 simultaneously. In this way, the purpose of heating the food and separating the grease and the moisture of the food material from the food material can also be achieved.

In some implementations, in order to achieve a better heating effect on the food material in the second inner cavity 120, the second heating portion 400 may further include a third heat generation member 430. The third heat generation member 430 may also be disposed in the second inner cavity 120 and located at the top of the second inner cavity 120. As such, the second heat generation member 420 and the third heat generation member 430 may be both disposed in the second inner cavity 120 and opposite to each other. When the food material is placed in the second containing portion of the second inner cavity 120, the second heat generation member 420 can mainly heat a bottom side of the food material, and the third heat generation member 430 can mainly heat a top side of the food material. In this way, the food may be heated in a plurality of directions, and the temperature in the second inner cavity 120 can more efficiently reach the temperature required for cooking the food material by providing the second heat generation member 420 and the third heat generation member 430.

It should be understood that when the to-be-cooked food material needs to maintain a predetermined amount of moisture and grease, the food material may be placed in the second inner cavity 120, and the second fan 410 may be turned off. The second heat generation member 420 and the third heat generation member 430 may be configured to evenly heat a plurality of parts of the food material in the second inner cavity 120 through heat radiation. In this way, the cooking of the food material can be accomplished, and the food can maintain a predetermined amount of moisture.

In addition, it should also be understood that the first fan 310 mentioned above may be disposed in the gap between the first enclosing plate 700 and the housing 100 or the gap between the top plate 740 and the housing 100. Accordingly, the top plate 740 may have an air outlet corresponding to the air outflowing side of the first fan 310 when the first fan 310 is disposed in the gap between the top plate 740 and the housing 100, to allow the airflow generated by the first fan 310 to be introduced into the first inner cavity 110 through the air outlet of the top plate 740. When the first fan 310 is disposed between the first enclosing plate 700 and the housing 100, the first enclosing plate 700 may have an air outlet corresponding to the air outflowing side of the first fan 310, to allow the airflow generated by the first fan 310 to be introduced the first inner cavity 110 through the air outlet of the first enclosing plate 700.

The second fan 410 may be disposed in the gap between the second enclosing plate 800 and the housing 100. Therefore, the second enclosing plate 800 may have an air outlet corresponding to the air outflowing side of the second fan 410, to allow airflow generated by the second fan 410 to be introduced into the second inner cavity 120 through the air outlet of the second enclosing plate 800.

In some implementations, a projection of the first enclosing plate 700 on the partition plate 200 may be a first projection, and a projection of the second enclosing plate 800 on the partition plate 200 may be a second projection. The second projection may have an area smaller than an area of the first projection. As such, an area of a region enclosed by the second enclosing plate 800 on the partition plate 200 is smaller than an area of a region enclosed by the first enclosing plate 700 on the partition plate 200. Thus, the partition plate 200 is at least partially located outside the second inner cavity 120 at a side of the partition plate 200 facing towards the second enclosing plate 800. In this way, the region may be partially used for mountings of relevant components of the second heating portion 400, to reduce a protrusion of the housing surface of the cooking appliance of the present disclosure. As a result, the structure of the cooking appliance is more aesthetically pleasing and compact.

In some implementations, the first heat generation member 320, the second heat generation member 420, and the third heat generation member 430 may be at least one of a metal heat generation tube, a quartz heat generation tube, a metal heat generation wire, a light wave tube, and an electromagnetic heating portion. In an exemplary embodiment of the present disclosure, when the first heat generation member 320, the second heat generation member 420, and the third heat generation member 430 are metal heat generation tubes, the first heat generation member 320, the second heat generation member 420, and the third heat generation member 430 are connected to a power supply, and therefore the first heat generation member 320, the second heat generation member 420 and the third heat generation member 430 can generate heat after being powered on.

When the first heat generation member 320, the second heat generation member 420, and the third heat generation member 430 are light wave tubes, the light wave tubes also generate light after being powered on and heated. As such, it is easier for a user to know whether the first heat generation member 320, the second heat generation member 420 and the third heat generation member 430 are powered on and heated, in order that the user can determine a cooking condition of the food material in the first inner cavity 110 and a cooking condition of the food material in the second inner cavity 120.

The first heat generation member 320, the second heat generation member 420, and the third heat generation member 430 each may have a spiral structure. In an exemplary embodiment of the present disclosure, the first heat generation member 320 spirally extends from a center of a top wall of the first inner cavity 110 along an outer side of the top wall of the first inner cavity 110. In this way, the first heat generation members 320 may be evenly arranged at the top of the first inner cavity 110. Thus, the heat generated by the first heat generation member 320 can be evenly spread in various parts of the first inner cavity 110, allowing the food material placed in the first inner cavity 110 to be evenly heated.

The second heat generation member 420 may spirally extends from a center of a top wall of the second inner cavity 120 towards an outer side of the top wall of the second inner cavity 120. The third heat generation member 430 may spirally extends from a center of a bottom wall of the second inner cavity 120 towards an outer side of the bottom wall of the second inner cavity 120. As such, the second heat generation members 420 and the third heat generation members 430 may be evenly arranged in the second inner cavity 120. Thus, the heat generated by the second heat generation member 420 and the heat generated by the third heat generation member 430 can be evenly spread in the second inner cavity 120.

In some implementations, the first fan 310 and the second fan 410 of the present disclosure may be at least one of a centrifugal fan and an axial flow fan. When the first fan 310 and the second fan 410 are axial flow fans, the first fan 310 may have an axial direction towards the food material in the first inner cavity 110, and the second fan 410 may have an axial direction towards the food material in the second inner cavity 120. As such, the air force generated by the first fan 310 and the air force generated by the second fan 410 can directly act on the food material in the first inner cavity 110 and the food material in the second inner cavity 120 respectively.

When the first fan 310 and the second fan 410 are centrifugal fans, hot air channels may be defined at two opposite side walls of the first inner cavity 110 and the second inner cavity 120 respectively. The first fan 310 and the second fan 410 can circulate the hot gas in the first inner cavity 110 and the hot gas in the second inner cavity 120 through the hot air channels respectively. In this way, the purpose of allowing the air force of the first fan 310 to act on the food material in the first inner cavity 110 and the purpose of allowing the second fan 410 to act on the food material in the second inner cavity 120 can also be achieved.

In some implementations, in order to facilitate the taking in and out of the food material from the first inner cavity 110, the cooking appliance of the present disclosure may be further provided with a cover 600. The cover 600 may be hinged to the housing 100, and may be configured to enable the second opening to be opened and closed. As such, the second opening may be opened and closed by rotating the cover 600.

In an exemplary embodiment of the present disclosure, the second opening of the housing 100 may be defined at a side portion of the housing 100 and located at the side portion of the second inner cavity 120. The cover 600 may be hinged to one side edge of the second opening of the housing 100, which is convenient for the food material to be taken in and out of the second inner cavity 120. A hinge shaft may be provided at an edge of the second opening of the housing 100, and the cover 600 may be arranged around the hinge shaft.

In some implementations, the cooking appliance of the present disclosure may be further provided with a liner 500. The liner 500 may be disposed in the housing 100 and may be taken out from the housing 100. The liner 500 may be configured to place a food material. In an exemplary embodiment of the present disclosure, the liner 500 may be disposed in the first inner cavity 110, and the liner 500 has an outer shape matching a cavity shape of the first inner cavity 110, to enable the liner 500 to make full use of the space of the first inner cavity 110, and thus to enable a larger volume of the liner 500. Accordingly, more food materials may be placed in the liner 500. The liner 500 and the housing 100 are detachable, and therefore the liner 500 can be easily cleaned.

The cooking appliance of the present disclosure may be further provided with a door plate 530. The door plate 530 may be connected to a side wall of the liner 500. The first opening of the housing 100 may be blocked by the door plate 530 after the liner 500 is completely disposed in the housing 100, to enable the liner 500 to be closed in the first inner cavity 110 of the housing 100. In this way, an effect of cooking the food material in the liner 500 is better. The door plate 530 is provided with a handle 520, and the user thus can easily take the liner 500 in and out of the first inner cavity 110.

In addition, in other implementations, the outer wall of the liner 500 of the present disclosure may also serve as the partition plate 200. In an exemplary embodiment of the present disclosure, the first inner cavity 110 and the second inner cavity 120 of the housing 100 may be in communication with each other when the liner 500 is not mounted in the housing 100. The liner 500 matches the cavity shape of the first inner cavity 110, and therefore the outer wall of the liner 500 is attached to the inner wall of the first inner cavity 110. A bottom outer wall of the liner 500 is located between the first inner cavity 110 and the second inner cavity 120 to separate the first inner cavity 110 from the second inner cavity 120, and thus to achieve the purpose of enable the first inner cavity 110 and the second inner cavity 120 to be independent of each other. The liner 500 may be prepared by a heat conductive member, and therefore the heat in the first inner cavity 110 and the heat in the second inner cavity 120 can be mutually conducted through the liner 500. In other embodiments of the present disclosure, the door plate 530 and the handle 520 of the liner 500 may be prepared by a heat insulation member.

A tray 121 may be further provided in the second inner cavity 120 of the present disclosure. The food material heated in the second inner cavity 120 may be placed on the tray 121, and therefore the grease and the moisture precipitated from the food material in the second inner cavity 120 after air frying fall onto the tray 121, to prevent the grease and the moisture from falling onto the various components in the second inner cavity 120. As a result, it is more convenient for the user to clean the second inner cavity 120.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Moreover, the described specific features, structures, materials or characteristics may be combined in any one or more embodiments or examples in a suitable manner. In addition, different embodiments or examples described in the specification may be combined by those skilled in the art.

## Claims

1. A cooking appliance, comprising:
a housing (100);
a first enclosing plate (700) disposed in the housing (100), the first enclosing plate (700) having a first inner cavity (110);
a second enclosing plate (800) disposed in the housing (100), the second enclosing plate (800) having a second inner cavity (120);
a partition plate (200) disposed in the housing (100), the first enclosing plate (700) and the second enclosing plate (800) being respectively connected to two opposite sides of the partition plate (200), and the partition plate (200) separating the first inner cavity (110) from the second inner cavity (120); and
a heating assembly disposed in the housing (100), the heating assembly heating the first inner cavity (110) and/or the second inner cavity (120).

2. The cooking appliance according to claim 1, wherein a projection of the first enclosing plate (700) on the partition plate (200) and a projection of the second enclosing plate (800) on the partition plate (200) are both located within the partition plate (200).

3. The cooking appliance according to claim 2, wherein an area of the projection of the first enclosing plate (700) on the partition plate (200) is smaller than an area of the projection of the second enclosing plate (800) on the partition plate (200).

4. The cooking appliance according to any one of claims 1 to 3, wherein the first enclosing plate (700) comprises a first plate body (710), a second plate body (720), and a third plate body (730), the second plate body (720) and the third plate body (730) being respectively connected to two sides of the first plate body (710), the second plate body (720) and the third plate body (730) being bent towards the first plate body (710), and the first plate body (710), the second plate body (720), and the third plate body (730) being formed as one piece.

5. The cooking appliance according to claim 4, wherein the second enclosing plate (800) comprises a fourth plate body (810), a fifth plate body (820), and a sixth plate body (830), the fifth plate body (820) and the sixth plate body (830) being respectively connected to two sides of the fourth plate body (810), the fifth plate body (820) and the sixth plate body (830) being bent towards the fourth plate body (810), and the fourth plate body (810), the fifth plate body (820), and the sixth plate body (830) being formed as one piece.

6. The cooking appliance according to claim 5, wherein the first plate body (710), the second plate body (720), the third plate body (730), the fourth plate body (810), the fifth plate body (820), and the sixth plate body (830) each are sealingly connected to the partition plate (200).

7. The cooking appliance according to claim 6, wherein:
the cooking appliance further comprises two door posts (900);
the second plate body (720) and the fifth plate body (820) are arranged on one side; and
the third plate body (730) and the sixth plate body (830) are arranged on one side;
one of the two door posts (900) is connected to a side of the partition plate (200) facing away from the first plate body (710) and connected to the second plate body (720) and the fifth plate body (820); and
the other one of the two door posts (900) is connected to the side of the partition plate (200) facing away from the first plate body (710) and connected to the third plate body (730) and the sixth plate body (830).

8. The cooking appliance according to any one of claims 1 to 7, wherein the first inner cavity (110) is stacked on a top side of the second inner cavity (120).

9. The cooking appliance according to any one of claims 1 to 8, further comprising:
a bottom plate (840) connected to a side of the second enclosing plate (800) facing away from the partition plate (200); and
a top plate (740) connected to a side of the first enclosing plate (700) facing away from the partition plate (200).

10. The cooking appliance according to claim 9, wherein the first enclosing plate (700), the second enclosing plate (800), the top plate (740), and the bottom plate (840) each have a gap with an inner wall of the housing (100).

11. The cooking appliance according to any one of claims 1 to 10, wherein:
the cooking appliance further comprises a heat insulation portion (220); and
the partition plate (200) has a heat insulation cavity, the heat insulation portion (220) being disposed in the heat insulation cavity.

12. The cooking appliance according to any one of claims 1 to 11, wherein the heating assembly comprises:
a first heating portion (300) heating the first inner cavity (110); and
a second heating portion (400) heating the second inner cavity (120).
